# EUROPEAN PATENT SPECIFICATION

(11) **EP 1 837 834 B1**
(45) Date of publication and mention of the grant of the patent: **11.01.2012**
(21) Application number: 05820141.9
(22) Date of filing: 21.12.2005
(51) Int. Cl.: G07F 5/02, G07F 9/02, G07F 11/44

(54) **AUTOMATIC VENDING MACHINE**
AUTOMATISCHE VERKAUFSMASCHINE
DISTRIBUTEUR AUTOMATIQUE

(30) Priority: 21.12.2004 JP 2004369485
(43) Date of publication of application: 26.09.2007
(73) Proprietor: T-ARTS Company, Ltd., Katsushika-ku Tokyo (JP)
(72) Inventor: ATSUTA, Junichi, Yujin Company Ltd., Tokyo 124-0012 (JP); FUKUMOTO, Tomochika, Yujin Company Ltd., Tokyo 124-0012 (JP)
(74) Representative: Bailey, David Martin
(86) International application number: PCT/JP2005/023484
(87) International publication number: WO 2006/068176

(56) References cited:
- EP-A- 0 823 696
- WO-A-03/015039
- DE-A1- 19 729 845
- JP-A- 10 105 813
- JP-A- 10 208 119
- JP-A- 61 109 190
- JP-A- 2004 288 119
- JP-U- 55 100 280
- JP-U- 60 099 509
- US-A- 5 091 713
- US-A- 5 555 965
- US-B1- 6 382 387

## Description

The present invention relates to an automatic vending machine.

Conventionally, automatic vending machines in which a merchandise holing drum is operated by operation power by a handle after a coin is inserted and the merchandise is discharged one by one by that rotation have been known (for example, Japan Patent Publication (laid-open) 2003-123135

WO 03/015039, EP 823696 and US 5091713 each describes an automatic vending machine in which a discharge merchandise holding member is operated after a coin is inserted and a piece of merchandise is discharged by operation of the holding member. The machine includes a display to perform a predetermined display at a present occasion in a manner viewable from outside the machine.

An article discharging device having a main body with an opening which is provided in a front side, comprising a container for containing and holding an article therein, which comprises a front wall at least a portion of which is transparent and an article entrance formed in an upper side, wherein the container is able to close the opening and the article held in the container can be viewed through the transparent portion of the front wall in a closed state, and the container can be rotated reciprocally around a predetermined axis to take the closed state or an article entrance exposed state.

Such automatic vending machines, in which the merchandise is discharged by mechanically transmitting the operation power of the handle to the drum, are sited in stair case landing of department stores, in front of convenient stores or toy shops, and in game arcades. Because this type of automatic vending machine neither has external electric power source nor incorporates internal power source, it has no means of display. Therefore, in operating the handle, it could offer a customer little pleasure besides waiting to see which type of merchandise is going to be discharged. In addition, even when the merchandise runs out or when the machine is full of coins, there was no means to let the machine manager know. The present invention has been developed in view of the above described problems, and an object of the invention is to present an automatic vending machine which is capable of displaying in a manner viewable from the outside at a predetermined timing.

Accordingly, the present invention provides an automatic vending machine in accordance with claim 1. The dependent claims set out features of certain preferred embodiments of the invention. Here, the "preset occasion" is, for example, when the handle is being rotated, when the merchandise runs out, when the machine is out of order, when maintenance is needed, and when a predetermined switch on a box is pressed or a RFID or the like is brought close in order to check the total number of the discharged merchandise.

Preferably, the display section is capable of displaying a total number of the discharged merchandise since a predetermined time in a manner viewable from an outside and the machine for comprises a discharge merchandise detecting section to detect the piece of merchandise to be discharged and to output an detection signal thereof; and a processing apparatus to determine the total number of the discharged merchandise on the basis of the signal of the detection outputted by the discharge merchandise detecting section and to make the display section display the total number of the discharged merchandise at a preset occasion.

Preferably, the automatic vending machine further comprises: a reader provided in the box body to perform communication with an external RFID, wherein when the external RFID is brought close, the reader detects the RFID while the processing apparatus makes the display section display for a predetermined period of time the total number of the discharged merchandise on the basis of a detection signal. Here, the "predetermined period of time" means that the display will not remain persistently after the RFID is brought close. The "predetermined period of time" in this case needs to be long enough at least for transcribing the total number of the discharged merchandise displayed on a notepad or other recording equipments. On the other hand, because a total number of the discharged merchandise is typically confidential information, if this information is displayed for too long a time, the machine manager would not be able to leave the machine until the display disappears. Thus, the "predetermined period of time" should be preferably within about 30 seconds and at the longest within 1 minute.

More preferably, the discharge merchandise detecting section is a discharge merchandise detecting apparatus to detect whether there is any merchandise to be discharged next and to output a detection signal thereof, and the machine further comprises a coin insertion preventing section to prevent insertion of a coin, and when there is no merchandise to be discharged next on the basis of the detection signal outputted by the discharge merchandise detecting apparatus, the processing apparatus controls the coin insertion preventing section to prevent insertion of a coin. Followings are some possible methods for detecting whether there is the merchandise to be discharged next. For example, when the configuration of the machine is such that the discharge merchandise holding member is already holding the piece of merchandise to be discharged next, the portion in which the piece of merchandise to be discharged next is held may be monitored. When the piece of merchandise to be discharged next is not held in the discharge merchandise holding member but there are other portions in which merchandise to be discharged next is held, for example, when the merchandise is supplied one by one to the discharge merchandise holding member through some passage, the merchandise to be discharged next may be monitored at a portion of that passage where the merchandise is.

In accordance with a fifth invention, the automatic vending machine recited in the second or third invention further comprises: a coin detecting section to detect whether the machine is full of inserted coins and to output a detection signal thereof; and a coin insertion preventing section to prevent insertion of a coin, wherein when the machine is full on the basis of the detection signal outputted by the coin detecting section, the processing apparatus controls the coin insertion preventing section to prevent insertion of a coin thereafter. Here, it is preferable that the "prevention of insertion of the coin" be performed, for example, in a following way. For example, when the merchandise is discharged at insertion of one coin, insertion of coins thereafter is prevented. When the merchandise is discharged at insertion of a plurality of coins and the machine became full after the insertion of one coin, insertion of that plurality of coins is allowed, but coins thereafter are prevented. In such a case, it is preferable that a section to notify that the machine is full of coins be provided. For example, it is preferable to display that the machine is full on the display section.

In accordance with a sixth invention, the automatic vending machine recited in the third invention further comprises: a coin detecting section to detect whether the machine is full of coins and to output a detection signal thereof, wherein when the machine is full of coins on the basis of the detection signal outputted by the coin detecting section, the processing apparatus controls the coin insertion preventing section to prevent insertion of a coin thereafter. Here, it is preferable that the "prevention of insertion of the coin" be performed, for example, in a following way. For example, when the merchandise is discharged at insertion of one coin, insertion of the coins thereafter is prevented. When the merchandise is discharged at insertion of a plurality of coins and the machine became full after the insertion of one coin, insertion of that plurality of coins is allowed, but insertion of coins thereafter is prevented. In such a case, it is preferable that a section to notify that the machine is full of coins be provided. For example, it is preferable to make the display section display that the machine is full.

In accordance with a seventh invention, in the automatic vending machine recited in the fourth to sixth inventions, the processing apparatus makes the display section display a sold out display in conjunction with prevention of insertion of a coin by the coin insertion preventing section.

### Effects of the Invention

According to the first invention, because a predetermined display is performed at a predetermined timing in a manner viewable from the outside, a radically new automatic vending machine can be realized in the field of automatic vending machines in which a discharge merchandise holding member is operated by operation power by a handle after a coin is inserted and the merchandise is discharged by the operation of the holding member. Meanwhile, because a display is performed only at a predetermined timing, electricity consumption can be minimized. Further, according to the second invention, because the total number of discharged merchandise is viewable from the outside, management of the total number of discharged merchandise, namely the total sales figures can be easily managed without opening the box body. Further, according to the third invention, because the total number of discharged merchandise is displayed for a predetermined period of time only when a RFID is brought close, the information is accessible to only those who have the RFID and can be kept confidential to others. Further, according to the fourth invention, because insertion of the coin is prevented and the handle is made inoperative when there is no merchandise to be discharged next, the discharging movement of the machine in the absence of the merchandise is prevented, while the total number of discharged merchandise, namely the total sales figures, is not displayed incorrectly. Further, according to the fifth and sixth invention, because coin insertion is prevented and the handle is made inoperative when the machine is filled up with inserted coins, it is easy to collect the coins. Further, according to the seventh invention, because sold out display is performed on the display section in conjunction with the prevention of insertion of coins, it is easy to manage the vending machine.

### Brief Description of the Drawings

[FIG. 1] This is a perspective view of the automatic vending machine according to the present invention in a double layered state.
[FIG. 2] This is an exploded perspective view of the automatic vending machine according to the present invention.
[FIG. 3] This is a perspective view showing the retaining panel accompanying the lid in an opened state.
[FIG. 4] This is a conceptual cross-sectional view of the automatic vending machine.
[FIG. 5A] This is a perspective view showing the lock body and the key to lock the lid to the box body.
[FIG. 5B] This is a perspective view showing the lock body and the key to lock the lid to the box body.
[FIG. 5C] This is a perspective view showing an attachment structure of the lock body to the box body.
[FIG. 6] This is a perspective view showing the buffer section to prevent the operation board from falling.
[FIG. 7] This is a perspective view showing the dismantled compartment panel and the discharge merchandise holding member.
[FIG. 8] This is a perspective view showing the mounted drum with the adopter attached.
[FIG. 9] This is a view showing an integration structure of the drum body and the regulatory panel.
[FIG. 10] This is a view showing an adjusting mechanism of the merchandise holding hole.
[FIG. 11A] This is a view showing the lid which opens and closes the merchandise discharging opening in a normal state.
[FIG. 11B] This is a view showing the lid which opens and closes the merchandise discharging opening in a state a little pushed in.
[FIG. 11C] This is a view showing the lid which opens and closes the merchandise discharging opening in a state pushed in.
[FIG. 12] This is a view showing an attachment structure of the top panel.
[FIG. 13] This is an exploded prospective view showing the box bodies laid out and connected.
[FIG. 14] This is a perspective view showing the box bodies laid out and connected.
[FIG. 15] This is a piece diagram showing the inner circuitry.
[FIG. 16] This is a view for explaining an example of an attachment position of the coin detecting section.
[FIG. 17A] This is a plan view showing a configuration of the coin insertion preventing section.
[FIG. 17B] This is a back side back view showing a configuration of the coin insertion preventing section.

### Best Mode for Carrying Out the Invention

### (General Configuration)

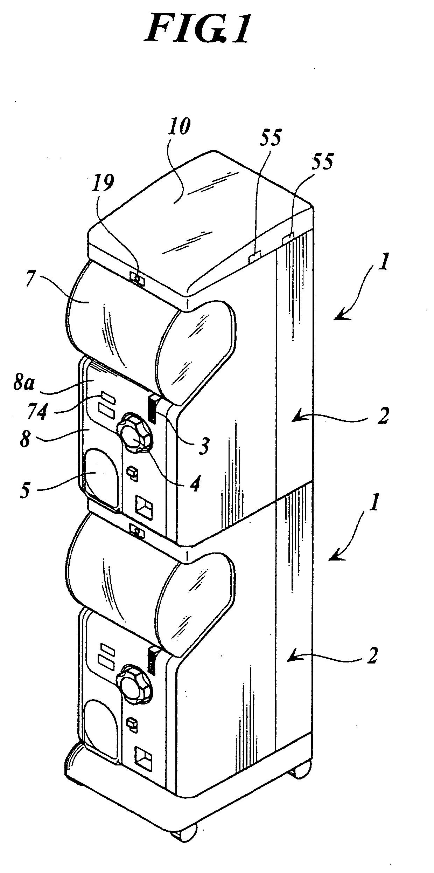

The automatic vending machine 1 shown in FIG. 1 is such that, for example, merchandise A (hereinafter, capsulated merchandise A) which is capsulated, is contained in a box 2, and after a predetermined coin is inserted in a coin slot 3 disposed in a front side of the box 2, by a person rotating a handle 4, discharges the capsulated merchandise A in the box 2 from a merchandise discharging opening 5 disposed in the front side of the box 2. The automatic vending machine 1 shown in FIG. 1 has the boxes 2 double layered, wherein a base on casters is attached under the lower box 2, and a top panel 10 is attached on the upper box 2.

### (Configuration of Box 2)

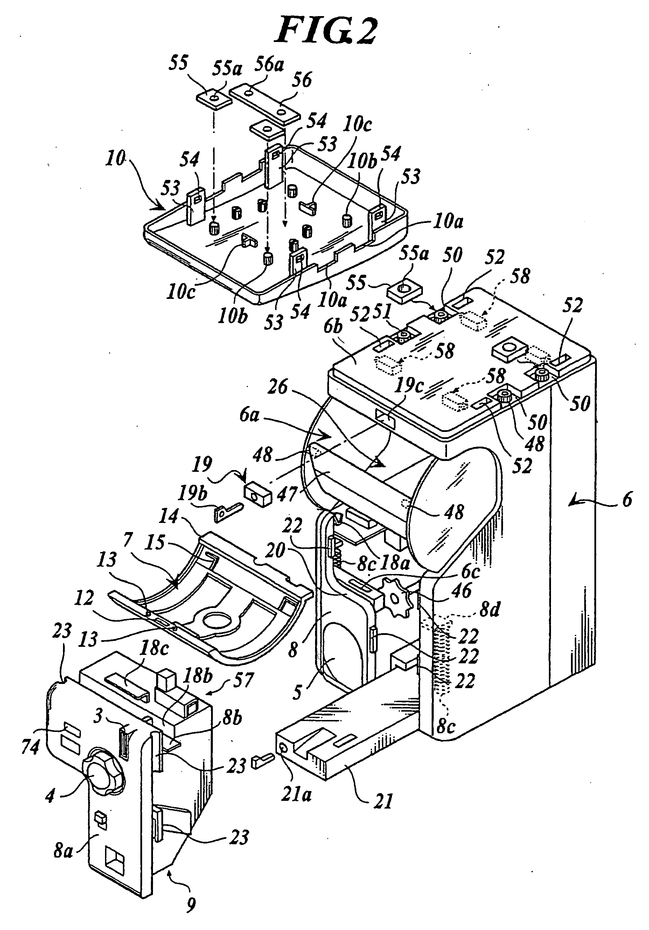

As shown in FIG. 2, the box 2 has a box body 6, a lid 7 to cover a merchandise supply opening 6a in a front side of the box body 6, an operation board 8a which composes a part of a front panel 8 disposed on the lower front side of the box body 6 and which has a coin sorting unit 9 on the back side of the operation board 8a, and a top panel 10 which covers the top surface of the box body 6.

### (Configuration of Lid 7)

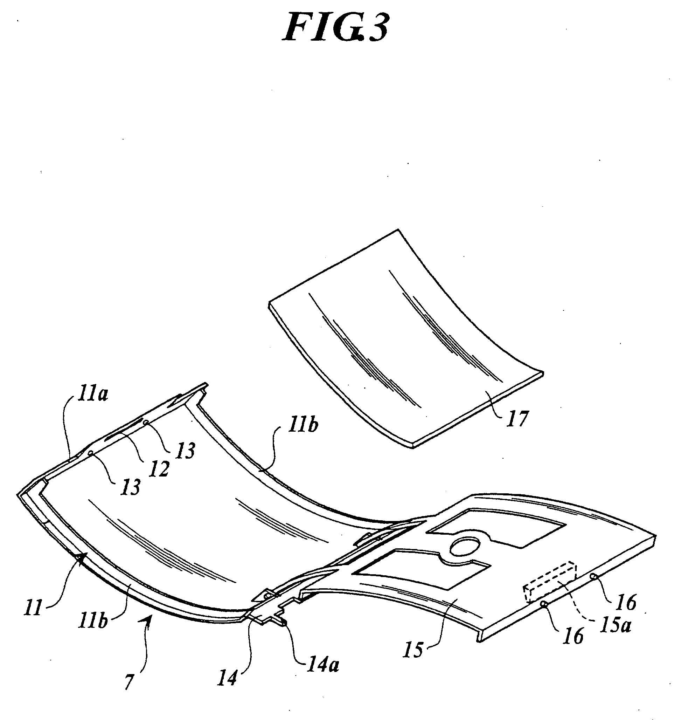

The lid 7 is made of transparent plastic, and as shown in FIG. 3, is formed to bulge forward. The lid 7 is provided with walls 11 extending backward from the outer edges of the lid 7 comprising an upper edge wall 11a and side walls 11b. Further, in the center in the width direction of the upper edge wall 11a of the lid 7, an elongate hole 12 is formed in the width direction of the box 2. In the upper edge wall 11a of the lid 7, also small holes 13 are formed to sandwich the elongate hole 12. In addition, inside the lid 7, a retaining panel 15 which is bulging forward in the same manner as the lid 7 is rotatably attached with respect to a base portion (lower edge of the bend) of the lid 7. Pins 16 are provided to protrude upward from the upper edge of the retaining panel 15. Immediately below the center of the upper edge of the retaining panel 15, a handle 15a is provided to protrude rearward. The retaining panel 15 is fixed in alignment with the lid 7 by holding a display 17 such as a point-of-purchase display is held between the retaining panel 15 and the lid 7 and fitting the pins 16 into the small holes 13 of the lid 7,. The display 17 may be removed by holding the lid 7 with one hand while laying the other hand on the handle 15a and pulling the handle 15a, to let the free end of the retaining panel 15 to disengage from the lid 7. Under the bend of the lid 7, a flexion 14 extending downward is provided. On the right and left sides of the lower edge of the flexion 14, protrusions 14a are formed.

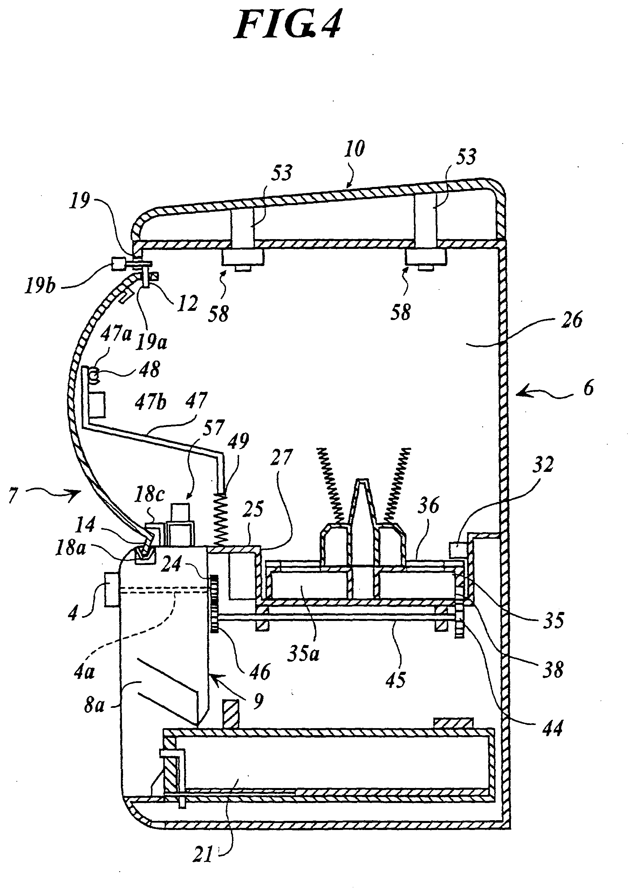

Next, the attachment structure of the lid 7 will be explained. Side walls on both right and left of the merchandise supply opening 6a of the box body 6 is composed of transparent panels so as to allow the capsulated merchandise A inside to be viewable slantingly from the outer sides. On the inner side of the side walls of the box body 6, as shown in FIG. 4, V-shaped dents 18a, the openings of which face upward, are formed. These dents 18a are for positioning the lid 7. That is, when attaching the lid 7, the flexion of the lid 7 in the state of being tilted to the front (with the inner side of the lid 7 facing upward) is placed in the dents 18a, to let the front portion of the flexion contact with the front side wall of the dent 18a. The lid 7 is then successfully positioned. From that position, with the lid 7 raised on the lower edge of the flexion of the lid 7, the rear side of the flexion of the lid 7 contacts with the wall of the back side of the dent 18a, bringing the lid 7 to its closed position. Meanwhile, on the upper surface of the operation board 8a, a long groove 18b is formed in the width direction. The long groove 18b is where the flexion of the lid 7 is placed, and is formed to be of the size and shape to allow rising and tilting of the lid 7. Further, in the center in the width direction of the upper surface of the operation board 8a, a locking piece 18c is disposed. Further, on the upper surface of the operation board 8a, a locking piece 18c is disposed. The locking piece 8c is for stopping the upward movement of the closed lid 7. That is, when the lid 7 is being raised, the lower edge of the bend thereof seats below the locking piece 18c to stop the upward movement of the closed lid 7. In order to effectively stop the upward movement of the lid 7, it is preferable that the lower edge of the bend of the lid 7 be formed to have a curvature different from other parts of the bend, so as to let the lower edge of the flexion of the lid 7 be of the shape that would be locked well by the locking piece 18c.
When the lid 7 is closed, the protrusions 14a formed on the flexion of the lid 7 seat below the upper wall of the operation board 8a. The lid 7 is thereby locked at the operation board 8a. It is preferable that a portion for laying one's hand on be formed on the front side of the lid 7 so that it is easy to pull down the lid 7 when removing the lid 7 from the box body 6.

### (Configuration of Lock 19)

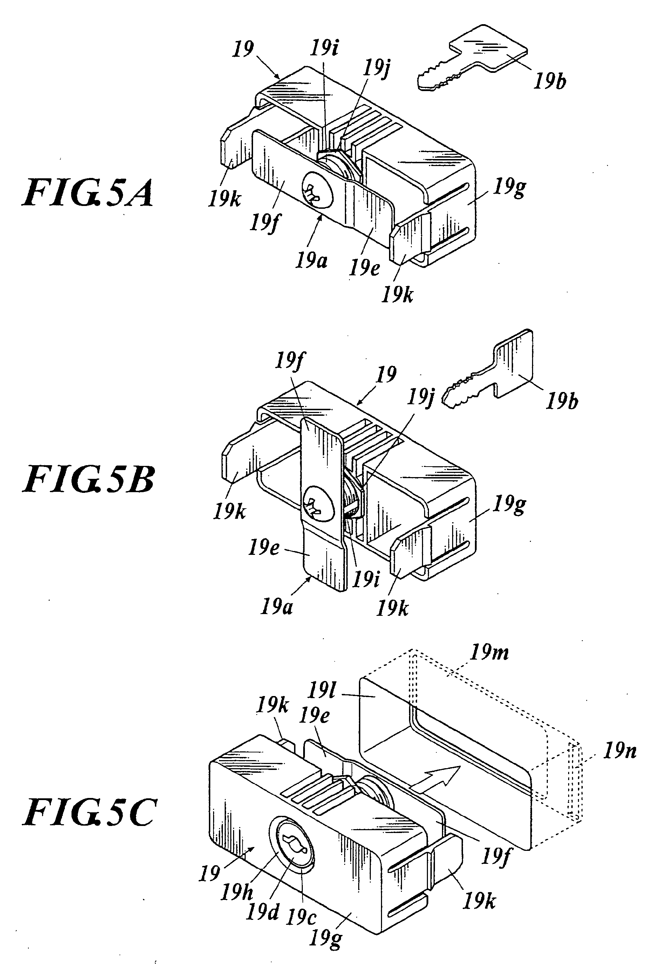

As shown in FIG. 2, a lock 19 is provided above the merchandise supply opening 6a of the box body 6. As shown in FIG. 5A and FIG. 5B, the lock 19 includes a lock body 19a and a key 19b. The lock body 19a includes a cylinder 19c, a rotor 19d and locking pieces 19e, 19f. The lock body 19a is detachably held by a attachment piece 19g. The locking piece 19e and the locking piece 19f are, thought not limited to, integrated in the present embodiment.

Next, the attachment method of the lock body 19a to the attachment piece 19g will be explained. When attaching the lock body 19a to the attachment piece 19g, the locking pieces 19e, 19f should be removed beforehand. The lock body 19a thus prepared is pushed in a dent 19h on the front side of the attachment piece 19g. A locking portion (not shown) on the outer periphery of the cylinder 19c then hits the bottom of the dent 19b, stopping the lock body 19a being pushed further. Meanwhile, because on the bottom of the dent 19h there is a through hole which opens through to the back of the attachment piece 19g, when the lock body 19a is in a state of being pushed into the attachment piece 19g, the cylinder 19c partially projects from the back of the attachment piece 19a. Then, a nut 19j is screwed on to a male thread 19i which is formed on this projecting portion. Finally, the locking pieces 19e, 19f are securely screwed on to the rear end of the rotor 19d from the back of the projection portion.
Thus, the lock body 19a is attached to the attachment piece 19g. Meanwhile, when removing the lock body 19a from the attachment piece 19g, a reverse procedure should be taken.

Next, the attachment structure of the attachment piece 19g will be explained. Nails 19k, 19k are provided on the right and left sides of the attachment piece 19g. Meanwhile, a dent 191 is formed on the box body 6 for the attachment piece 19g to fit in. Further, holes 19m, 19n are formed in the bottom of the dent 191.
In order to attach the attachment piece 19g to the box body 6, the attachment piece 19g having the lock body 19a attached, the locking pieces 19e, 19f should be turned horizontally beforehand, as shown in FIG. 5A. Next, as shown in FIG. 5C, the attached piece 19g is inserted in the dent 191 with the locking pieces 19e, 19f facing the dent 19l,. At this time, the locking pieces 19e, 19f and the tip of one nail 19k pass through the hole 19m. On the other hand, the tip of the other nail 19k passes through the hole 19n. The protrusions formed on the outer sides of the nails 19k, 19k are locked at the back side of the dent 191 due to the elasticity of the nails 19k, 19k.
Thus, the attachment piece 19g is attached to the box body 6. Meanwhile, when removing the attachment piece 19g from the box body 6, the attachment piece 19g should be pushed out manually from the inside of the box body 6 while the locking pieces 19e, 19f are turned horizontally.

Next, the locking structure of the lid 7 by the lock 19 will be explained. When the locking pieces 19e, 19f are turned horizontally, the lid 7 is not in the state for being locked to the box body 6. Meanwhile, when the locking pieces 19e, 19f are raised vertically by the key 19b, the locking piece 19e enters into the elongate hole 12 of the lid 7. The locking piece 19f enters into the elongate hole (not shown) of an upper wall 6b of the box body 6. As a result, the lid 7 is locked to the box body 6, and the attachment piece 19g is fixed to the box body 6.
Although the lid 7 is directly locked to the box body 6 by using the locking piece 19e of the lock 19 in the present embodiment, where the box body 6 can be provided with a movable member capable of taking a locking position and an unlocking position of the lid 7, the lid 7 may be indirectly locked to the box body 6 by locking the movable member at the locking position by using the lock 19. Further, although the locking piece 19f is additionally entered into the elongate hole (not shown) in the upper wall of the box body 6 to lock the lid 7 to the box body 6 in the present embodiment, it may be that only the locking piece 19e be entered into the elongate hole 12 in the lid 7. In addition, in order to have the locking piece 19f enter also into the elongate hole (not shown) in the upper wall 6b of the box body 6, the upper wall 6b may be of a double layered structure so as to let the locking piece 19f enter the elongate hole in the lower layer of the upper wall, or else, a locking piece on which an elongate hole is formed may be provided on the lower side of the upper wall 6b.

### (Configuration of Operation Board 8a)

The operation board 8a, as shown in FIG. 2, is of an inverted L-shaped structure when viewed from the front. The operation board 8a is attached detachably to the box body 6.

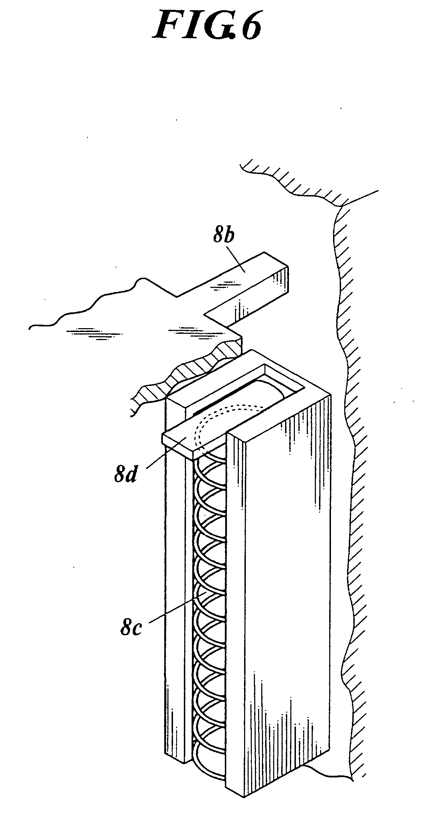

The FIG. 2 shows the operation board 8a being removed from the box body 6. The front panel 8 of the box body 6 has a cutout 20 of the same shape as the operation board 8a. On the right and left side walls of the operation board 8a, dented strips 23 are formed at a predetermined interval in the vertical direction. Meanwhile, on the walls that define the cutout 20 in the box body 6, protruding strips 22 are formed facing inward in the horizontal direction at an appropriate interval in the vertical direction. In order to attach the operation board 8a to the box body 6, having removed the lid 7 from the box body 6, the operation board 8a is lifted above the bottom of the cutout 20, then fit into the cutout 20, and slid down to engage the protruding strips 22 with the dented strips 23, thereby attaching the operation board 8a to a predetermined position of the box body 6. When removing the operation board 8a from the box body 6, a procedure reverse of that for attaching should be taken. The operation board 8a is provided with a connector (not shown) connectable with a connector 6c of the box body 6. When the operation board 8a is attached to the box body 6, the connectors are automatically connected together so as to electrically connect the operation board 8a and the box body 6.
By separately structuring the operation board 8a from the box body 6 so that the operation board 8a is removable from the box body 6, not only the maintenance of the operation board 8a but also that of the inside of the box body 6 is made easy.
As shown in FIG. 2 and FIG. 6, a locking piece 8b is provided on the right and left walls of the operation board 8a, to retain the operation board 8a in a state slightly lifted above the bottom of the cutout 20. The locking piece 8b contacts with a protrusion 8d which is biased by a spring 8c and is disposed on one of the walls that define the cutout 20. The operation board 8a is thus retained in a state slightly lifted above the bottom of the cutout 20. However, the retaining strength of the locking piece 8b is not very strong. That is, although the biasing force of the spring 8c of the locking piece is sufficient for supporting the weight of the operation board 8a, if the operation board 8a is intentionally pressed down, the operation board 8a would sink down against the biasing force thereof. Such a structure is applied in order to prevent the operation board 8a from sinking vigorously when the operation board 8a is fit into the box body 6, and to retain the operation board 8a in a state slightly lifted above the bottom of the cutout 20 while drawing out a below-mentioned coin collecting box 21.

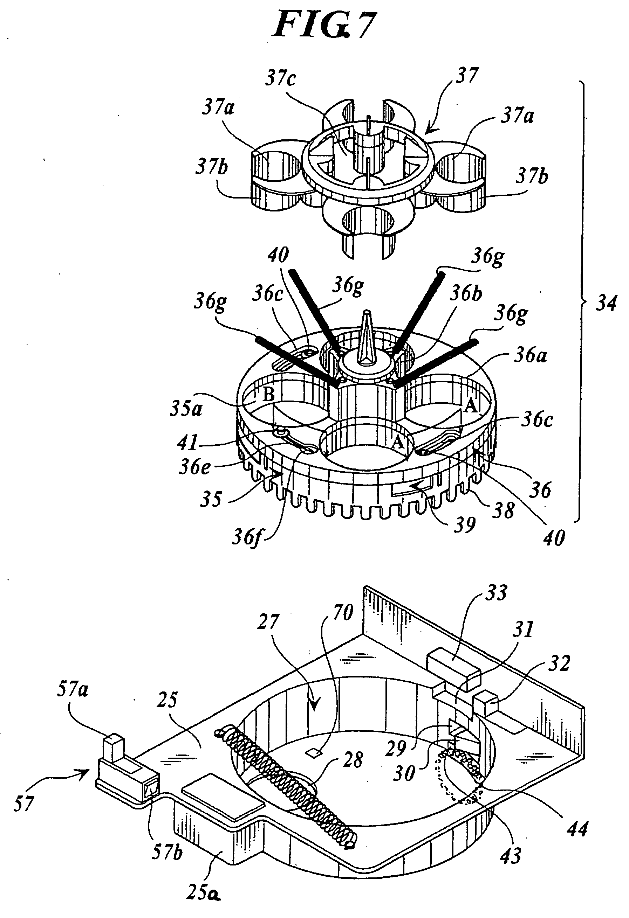

Next, the fixing structure of the operation board 8a will be explained. As shown in FIG. 2, FIG. 4, FIG. 7 and FIG. 8, the operation board 8a and a below-mentioned compartment panel 25 are each provided with a locking section 57 to lock the operation board 8a to the box body 6. As the two locking sections 57 are structured in the same manner, the structure thereof will be explained by taking the locking section 57 on the compartment panel 25 as an example. As shown in FIG. 7, the locking section 57 is provided with a locking pin 57b which is moved by the operation of an operation portion 57a. When the operation board 8a is attached to the box body 6, projecting the locking pin 57b by operating the operation portion 57a of the locking section 57 would position the locking pin 57b above the operation board 8a. The locking section 57 stops the upward movement of the operation board 8a. Meanwhile, as for the locking section 57 provided on the operation board 8a, the locking pin 57b which is projected by the operation of the operation portion 57a fits in an unshown dent provided in the box body 6.
The above described locking sections 57 are not indispensable. This is because with the operation board 8a attached, the lid 7 attached, and the lid 7 fixed to the box body 6 by the rotation of the key 19b, the upward movement of the operation board 8a is restricted by the lid 7, thereby making the operation board 8a irremovable. Nonetheless, the locking section 57 ensures the operation board 8a being fixed to the box body 6 with extra firmness.

### (Configuration of Compartment Panel 25)

Inside the box body 6, as shown in FIG. 4, the compartment panel 25 is disposed to separate the box body 6 into upper and lower parts. Above the compartment panel 25 is a merchandise storage space 26. On the compartment panel 25, a circular recess 27 is formed as shown in FIG. 4 and FIG. 7. In the bottom of recess a merchandise discharging hole 28 is formed. In the recess 27, a discharge merchandise holding member 34 is mounted. Further, in the bottom of the recess 27, a later described upcoming merchandise detecting section 70 is disposed. Also in the bottom of the recess 27, a rectangular hole 43 is formed to expose a gear 44.

### (Configuration of Discharge Merchandise Holding Member 34)

### 1. Overall View

As shown in FIG. 7, the discharge merchandise holding member 34 is composed of a drum 35 and an adapter 37. The drum 35 may be without a regulatory panel 36.

### 2. Drum 35

In the drum 35, a plurality of (four in the embodiment) merchandise holding holes 35a for holding merchandise with a relatively large diameter (for example, capsulated merchandise) are formed at regular intervals. In addition, on the periphery of the lower surface of the drum 35, a rack 38 is formed. When the drum 35 is mounted in the recess 27, the rack 38 and the gear 44 engages with each other. The gear 44, as shown in FIG. 4, is connected with a handle 4 via a shaft 45, gears 46, 24, and a shaft 4a. Therefore, when the handle 4 rotates, the rotational 22 force of the handle 4 is transmitted to the drum 35 via the shaft 4a, the gears 24, 46, the shaft 45, the gear 44 and the rack 38, to rotate the drum 35. In this case, when the handle 4 is turned about one turn, the rotational angle of the drum 35 is 360 / (the number of the merchandise holding holes 35a) degrees. Every time the handle 4 is turned about one turn, the merchandise holding holes 35a aligns with the merchandise discharging hole 28, thereby discharging one by one the merchandise held in the merchandise holding hole 35a.

In the peripheral surface of the drum 35, a dent 39 which functions in the same manner as ratchet teeth is formed. Meanwhile, on a portion of a peripheral wall that defines the recess 27, a rectangular hole 29 is formed. In the rectangular hole 29, a ratchet piece 30 which functions in the same manner as a ratchet pawl is disposed to be freely movable in and out of the rectangular hole 29. The dent 39 of the drum 35 engages with the ratchet piece 30 which is biased by an unshown spring in the projecting direction, and which prevents the inverse rotation of the drum 35.

### 3. Regulatory Panel 36

The drum 35 includes the regulatory panel 36. The regulatory panel 36 is disposed on a drum body. The regulatory panel 36 is rotatably structured within a predetermined angle around the shaft of the drum 35. In the regulatory panel 36, holes 36a having the same shape as the merchandise holding hole 35a are formed in the circumferential direction in the same number and pitch as the merchandise holding hole 35a. The holes 36a of the regulatory panel 36 function to change the diameters of the merchandise holding holes 35a in accordance with the rotational amount of the regulatory panel 36. In the center of the regulatory panel 36, a rib 36b stands to lead outward in the radius direction the merchandise stored above. The rib 36a is provided with four springs 36g projecting outward and upward to stir the merchandise stored above.

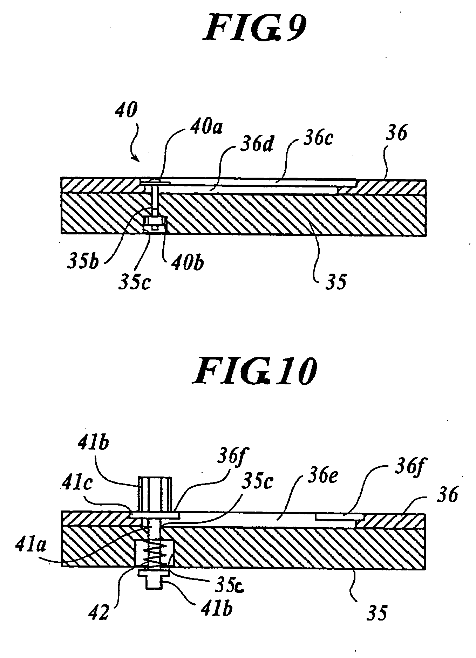

Next, the attachment structure of the regulatory panel 36 will be explained. As shown in FIG. 7 and FIG. 9, the drum 35 and the regulatory panel 36 are combined together by a screw 40. In other words, the drum body has a insertion hole 35b into which a shaft of a male thread 40a is inserted, and a counterbore 35c in which the nut 40b is seated. Meanwhile, the regulatory panel 36 has a circular arc shaped insertion hole 36d into which the shaft of the male thread 40a is inserted and which allows the rotational movement of the regulatory panel 36 against the drum body, as well as a circular arc shaped counterbore 36c in which the head of the male thread 40a and a washer are seated, and which allows the rotational movement of the regulatory panel 36 against the drum body.

Next, the merchandise holding hole adjusting mechanism will be explained. As shown in FIG. 10, the drum body has an insertion hole 35c into which a shaft 41a of a knob 41, and a counterbore 35c in which a coil spring 42 is seated, the coil spring 42 biasing downwards a nut 41b which is screwed to the lower end of the shaft 41a of the knob 41. Meanwhile, the regulatory panel 36 has a circular arc shaped insertion hole 36e into which the shaft 41a of the knob 41, and which allows the rotational movement of the regulatory panel 36 against the drum body, as well as a counterbore 36f which is formed on both ends of the circular arc shaped insertion hole 36e, and in which a brim 41c of the knob 41 is seated.

Next, the method to adjust the merchandise holding holes 35a by the regulatory panel 36 will be explained. When the brim 41c of the knob 41 falls in one counterbore 36f, the merchandise holding holes 35a align with the holes 36a of the regulatory panel 36, allowing merchandise with the maximum diameter to pass through. When the brim 41c of the knob 41 falls in the other counterbore 36f, the merchandise holding holes 35a of the drum 35 and the holes 36a of the regulatory panel 36 become misaligned, allowing only smaller merchandise to pass through.
To move the position of the knob 41 from one hole 36f to the other hole 36f, the knob 41 should be pulled up against the biasing force of the coil spring 42 to once remove the brim 41c from the counterbore 36f, while rotating the regulatory panel 36 with respect to the drum body in one direction so as that the knob 41 moves along the insertion hole 36c, and then drop the brim 41c into the other counterbore 36f.

### 4. Adopter 37

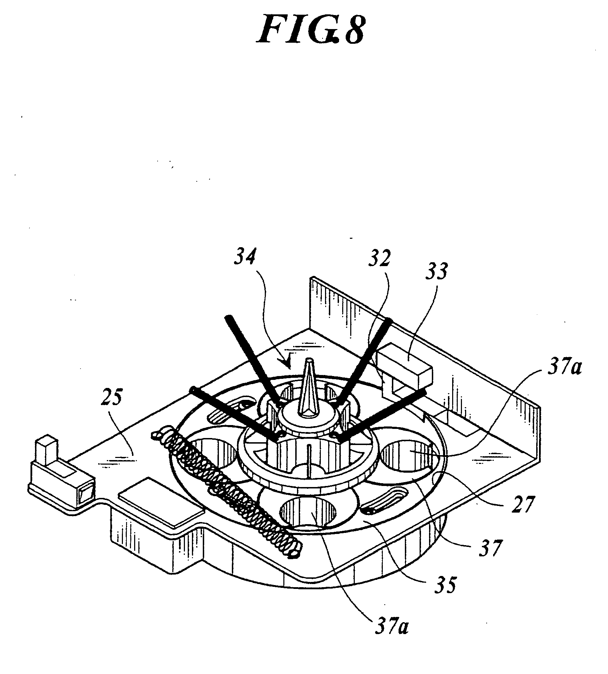

The adopter 37 is attachable to and detachable from the drum 35. As shown in FIG. 7, the adopter 37 is provided with merchandise holding holes 37a having a diameter smaller than the merchandise holding holes 35a and a shape with the outer portion being partially cut off. The merchandise holding holes 37a are formed in the circumferential direction of the adopter 37 in the same number as the merchandise holding holes 35a at regular intervals. When attaching the adopter 37 to the drum 35, having aligned the merchandise holding holes 35a of the drum 35 with the holes 36a of the regulatory panel 36, the springs 36g should be collected above the drum 35 to insert from below the springs 36g into the hole 37 in the center of the adopter 37, fit the rib 36b in the hole 37c, so that a cylindrical portion 37b on the lower surface of the adopter 37 falls into the merchandise holding holes 35a. Then, as shown in FIG. 8, the merchandise holding holes 37a and the edge portion thereof fit into the merchandise holding holes 35a. The use of the adopter 37 enables handling of the merchandise with even smaller diameter than when using the regulatory panel 36.

### 5. Attachment Structure of the Drum 35

As shown in FIG. 7, a cutout 31 is formed in the upper edge of the recess 27. The cutout 31 is provided with a freely protruding locking piece 32. Above the area in which the locking piece 32 moves, a guide piece 33 is disposed to limit the upward movement of the locking piece 32. The locking piece 32 locks the drum 35 in the recess 27 as shown in FIG. 8 by protruding to the position above the drum 35 while the drum 35 is placed in the recess 27. Meanwhile, when the locking piece 32 is removed from the position above the drum 35, the drum 35 is released from the lock and can be taken out of the recess 27.

### (Structure of Guide Plate 47)

As shown in FIG. 1 and FIG. 4, a guide plate 47 is disposed inside the box body 6. The guide plate 47 is bent. The lower end of the guide plate 47 is attached to the compartment panel 25 via a coil spring 49. The standing portion of the upper end of the guide plate 47 is provided with a dent 47a which is an inner facing opening and which engages with protrusions 48 on the inner walls on the right and the left of the merchandise supply opening 6a. By the engagement of the dent 47a with the protrusion 48, the guide plate 47 is retained on a slant towards the compartment panel 25 from the middle portion of the merchandise supply opening 6a. When the dent 47a is disengaged from the protrusion 48, the guide plate 47 can be pulled down to the front to broaden the merchandise supply opening 6a, thereby making it easy to supply merchandise and to implement maintenance of the inside of the box body 6.

### (Merchandise Discharging Mechanism)

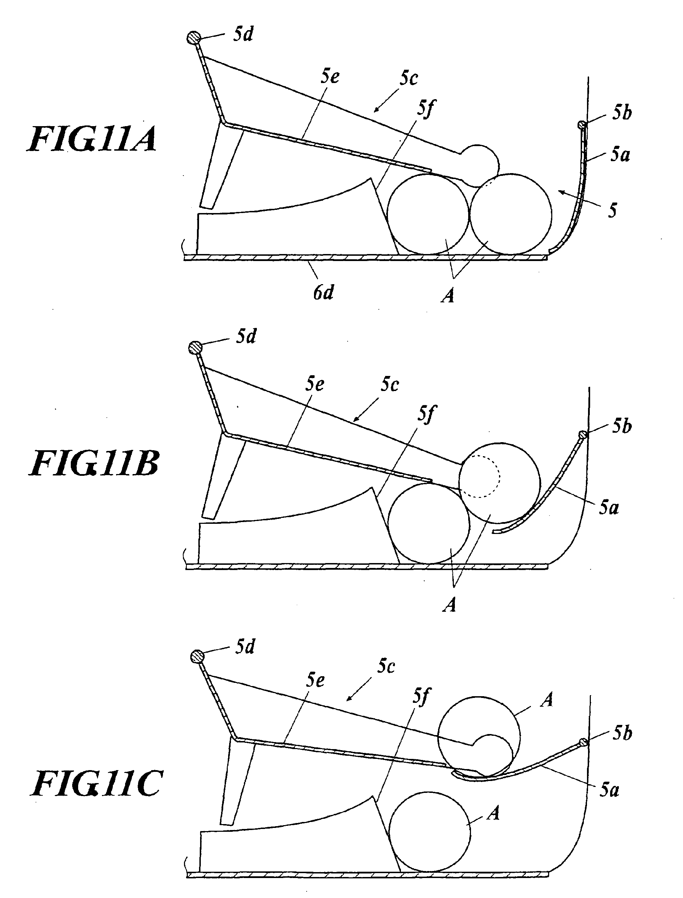

FIG. 11A to FIG. 11C show the inner structure of the merchandise discharging opening 5. The front panel 8 of the merchandise discharging opening 5 is provided with a lid 5a to open and close the merchandise discharge opening 5. The lid 5a is structured to rotate inwards of the box body 6. Inside the lid 5a of the box body 6, a mechanism to discharge the capsulated merchandise A is provided. The discharging mechanism includes a stopper 5f located on a bottom wall 6d, and a shooter 5c disposed above the stopper 5f. The shooter 5c is attached to the box body 6 so that the shooter 5c can rotate about a shaft 5d. The shooter 5c has an approximately L-shaped bottom wall 5e. The shooter 5c receives the capsulated merchandise A which is dropped from the merchandise discharging hole 28 formed in the recess 27 of the compartment panel 25, and then guides the capsulated merchandise A to the merchandise discharging opening 5.
As shown in FIG. 11A, the depth from the lid 5a to the stopper 5b is about the size which allows two pieces of capsulated merchandise A to be stored. The width of the merchandise discharging opening 5 is about the size which allows one piece of capsulated merchandise A to be stored. When the lid 5a is turned inward after two pieces of capsulated merchandise A are pooled inside the merchandise discharging opening 5, as shown in FIG. 11B, the capsulated merchandise A in the front is scooped up by the lid 5a. Then, as shown in FIG. 11C, the tip of the side wall of the shooter 5c contacts the lid 5a at some point from which the shooter 5c and the lid 5a scoop together the capsulated merchandise A, completely opening up the merchandise discharging opening 5. The capsulated merchandise A laying on the bottom wall 6d is then to be taken out. Next, when the lid 5a is closed once, because the capsulated merchandise A which had been previously scooped up is now dropped from the lid 5a, the capsulated merchandise A can be taken out when the lid 5a is reopened. According to this merchandise discharging mechanism, even if there are plural pieces of capsulated merchandise A as shown in FIG. 11A, it is ensured that the lid 5a can be opened up and the merchandise can be taken out.
Although in the above embodiment, the lower portion of the lid 5a is bent in towards to the box body, the same functions may be realized also by forming a rib (protruding piece or some other protruding portion) inside the lid 5a, bending the inner side of the rib, or forming a hock portion on the rib.

### (Structure of Coin Collecting Box 21)

As shown in FIG. 2 and FIG. 4, in the bottom of the box body 6, behind the cutout 20, a coin collecting box 21 is disposed. The coin collecting box 21 can be pulled out to the front and removed from the box body 6. The coin collecting box 21 can be fixed to the box body 6 by the lock 21a. The coin collecting box 21 is to be attached and removed from the box body 6 with the operation board 8a retained slightly above the bottom of the box body 6, or with the operation board 8a completely removed from the box body 6.
When the operation board 8a is attached to the box body 6, the coin collecting box 21 attached to the box body 6 is completely covered and non-viewable from the front.

### (Attachment Structure of Top Panel 10)

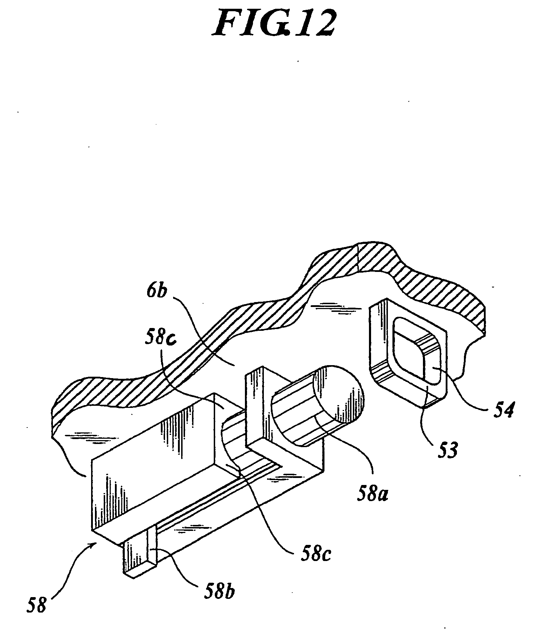

FIG. 1 shows the top panel 10 being attached to the box body 6, while FIG. 2 shows the top panel 10 removed from the box body 6. FIG. 2 shows the top panel 10 turned inside out. On the lower side surface of the top panel 10, tongue pieces (insertion portion) 53 are disposed perpendicularly downward and in the tip of each of the tongue pieces a hole (locking hole) 54 is formed. In the upper wall 6b to which the top panel 10 is attached, rectangular holes (insertion hole) 52, for example, are formed. The top panel 10 is seated on the box body 6 when the tongue pieces 53 of the top panel 10 are inserted in the holes 52 of the upper wall 6b.
On the upper wall 6b of the box body 6, locking members 58 are attached. The locking members 58 are insertable in the holes 54 of the tongue pieces 53 that are inserted in the holes 52. That is, as shown in FIG. 12, the locking members 58 have shafts 58a and operation portions 58b. The locking members 58 are attached to the box body 6 so as to be movable back and forth in the direction perpendicular to the direction of the tongue pieces 53 of the top panel 10. Here, the movement direction aligns with the shaft line direction of the shafts 58a. Further, each of the locking member 58 is rotatable about the shaft line of the shaft 58a when the shaft 58a is inserted in the hole 54. When each of the locking member 58 is rotated in one direction with the shaft 58a inserted in the hole 54, the operation portion 58a is locked by the locking portion 58c to prevent the movement of the locking member 58 in the shaft line direction. The locking member 58 is thus locked.
The attachment structure of the top panel 10 as described above has the following advantages. Although two boxes 2 are piled in the present embodiment, by disposing the tongue pieces 53 on the lower surface of the upper box 2, that are similar with those on the top panel 10, the boxes 2 can be piled up easily in the same manner as in attaching the top panel 10. In addition, by disposing the tongue pieces 53 similar with those of the top panel 10 on the lower surface of a display box other than on the box 2, a display box (display case) can be provided easily in same manner as in attaching the top panel 10. Although it is difficult to observe the inside of the box 2 of the automatic vending machine 1 because the operation board 8a and the display body 17 and the like are provided in the box 2, the merchandise inside can be displayed using the display box, to let a customer know what kind of merchandise is in that automatic vending machine 1.

### (Coupling Structure of Automatic Vending Machine 1)

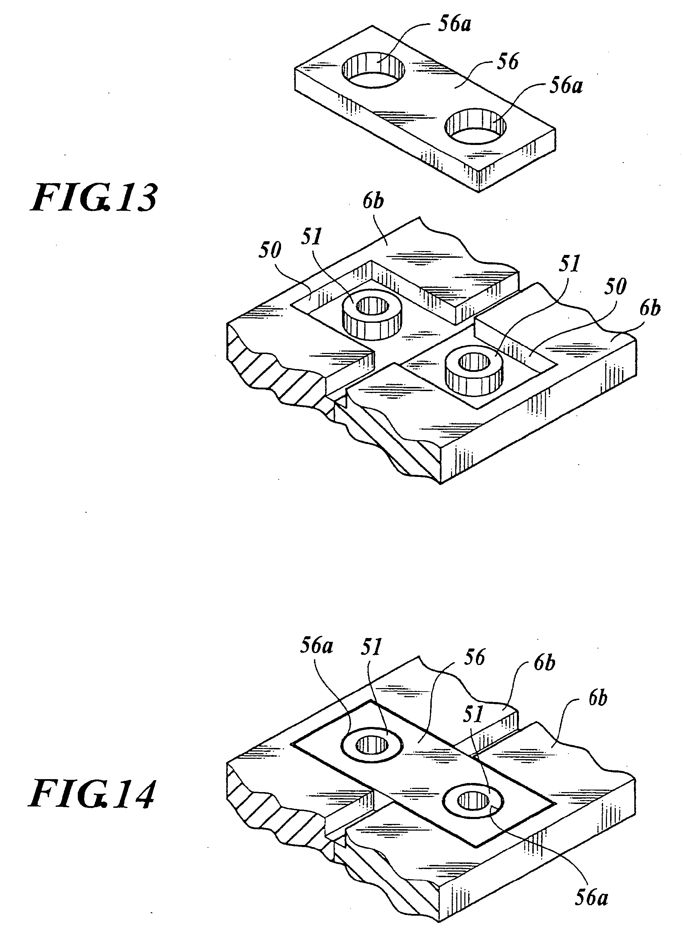

The automatic vending machine 1 is provided with a coupling block 56 as shown in FIG. 2, FIG. 13 and FIG. 14. The coupling block 56 has two holes (engaging portion) 56a. In order to line and couple the automatic vending machines together, the holes 56a of the coupling block 56 are fit in a cutout 50 of each of the box body 6, with a boss (engaging portion) 51 of each of the box body 6 fitted in, after which the top panel 10 of each of the box body 6 is attached.
When the automatic vending machine 1 is used singularly, a cutout 10a of an end plate 10 can be filled by fitting a block 55 which has one hole 55a into the boss 51 of the box body 6.
When not in use, the blocks 55, 56 can be stored with the holes 55a, 56a fitted with bosses 10b standing on the back surface of the top panel 10 or between ribs 10c standing on the back surface of the top panel 10.
When coupling adjacent automatic vending machines 1 with the coupling block 56, it is preferable that the base be also coupled. Here, in coupling the bases, a clip which can hold the side walls of the bases, or the like is used.

### (Structure of Inner Circuit)

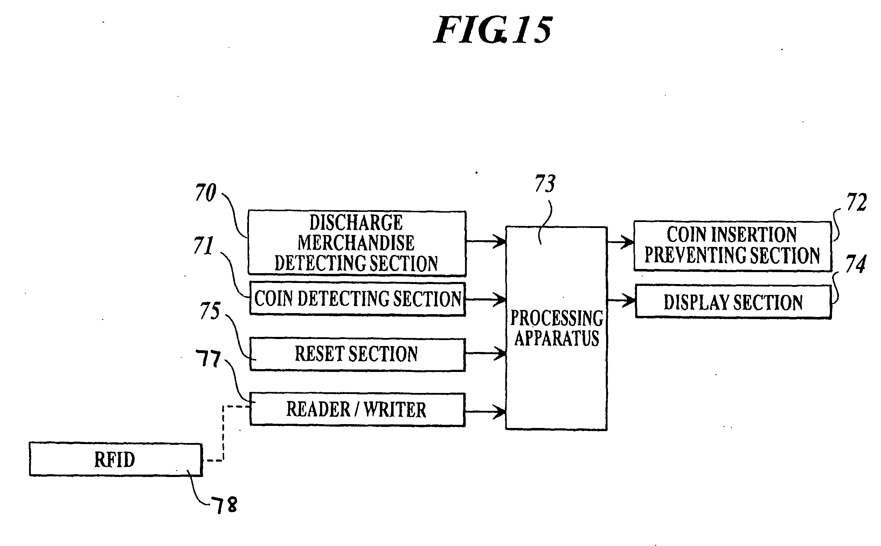

As shown in FIG. 15, the automatic vending machine 1 includes a discharge merchandise detecting section 70 to detect merchandise to be discharged and output a signal of the detection, a coin detecting section 71 to detect whether the machine 1 is full of inserted coins and output a signal of the detection, a display section 74 to display the total number of discharge or other various information, a processing apparatus 73 to control a coin insertion preventing section 72 on the basis of the detection signals outputted from the discharge merchandise detecting section 70 and the coin detecting section 71, and a reset section 75.

The discharge merchandise detecting section 70 is composed of, for example, a photo sensor and the like. As explained above, the discharge merchandise detecting section 70 is located in the bottom portion of the recess 27. The position of the discharge merchandise detecting section 70 is directly under the merchandise holding hole 35a which is presently not in alignment with the merchandise discharging hole 28 but would come in alignment with the merchandise discharging hole 28 when the drum 35 rotates accompanying the next rotation of the handle 4. Hereinbelow, the merchandise holding hole 35a in this position will be referred to as the next merchandise holding hole 35a. In a case a piece of merchandise is held in the next merchandise holding hole 35a, the piece of merchandise is to be surely discharged when the drum 35 rotates with the next rotation of the handle 4, as the next merchandise holding hole 35a comes in alignment with the merchandise discharging hole 28. Therefore, by detecting at every rotating operation of the handle 4 whether a piece of merchandise is held in the next merchandise holding hole 35a, the total number of discharged merchandise can be determined by the processing apparatus 73. In a case no merchandise is held in the next merchandise holding hole 35a, no merchandise would be discharged when the drum 35 rotates with the next rotation of the handle 4. Therefore, in order to prevent the discharging movement of the machine in the absence of the merchandise, the processing apparatus 73 controls the coin insertion preventing section 72 to prevent insertion of the coins.
Beside the above described discharge merchandise detecting section 70, to prevent the discharging movement of the machine in the absence of the merchandise by detecting the piece of merchandise to be discharged next, a discharge merchandise detecting section may be provided to detect the merchandise actually discharged through the merchandise discharging hole 28, or to detect the rotation of the drum 35 and determine the number of discharged merchandise on the basis of the detection signal. As shown in FIG. 7, in the present embodiment, a pocket 25a having a lid is provided for installing a discharge merchandise detecting section having a protrusion that is made to contact the peripheral surface of the drum 35 by a spring and to slide thereon as the drum 35 rotates.

The display section 74 is composed of, for example, a liquid crystal display section. When a RFID (Radio Frequency Identification) 78 is brought close to a predetermined portion of the operation board 8a, the reader 77 reads off the ID of the RFID, and when that ID is found to comply with the automatic vending machine 1, the processing apparatus 7 makes the display section 74 display the total number of discharged merchandise for a predetermined period of time (for example, for 30 seconds). The display section 74 may display other information than the total number of discharged merchandise. For example, a rotation detecting section may be provided separately to detect a rotation of the handle 4, to make the display section 74 display, when the handle 4 rotates, a predetermined motion display, or for example, a daily fortune-telling. Alternatively, when there is no merchandise to be discharged next, the display section 74 may be used to display "Sold Out" or the like. Further, when bringing close the RFID 78 to display the total number of discharged merchandise, in addition to the RFID 78 brought close, actuation of another switch may be made necessary. For example, the merchandise discharging opening 5 may be provided with a switch which may be actuated only when the lid 4a is turned to the back more than necessary (further back than when taking out the merchandise), as the lid 4a contacts the switch there.

The reset section 75 is disposed on the back side of the operation board 8a, so that the reset section 75 is inoperable from the outside of the box body 6. When the reset section 75 is operated, the total number of discharging merchandise that has been counted and stored in the memory unit of the processing apparatus 73 is reset. The processing apparatus 73 counts again the total number of discharging merchandise since the reset section is operated.

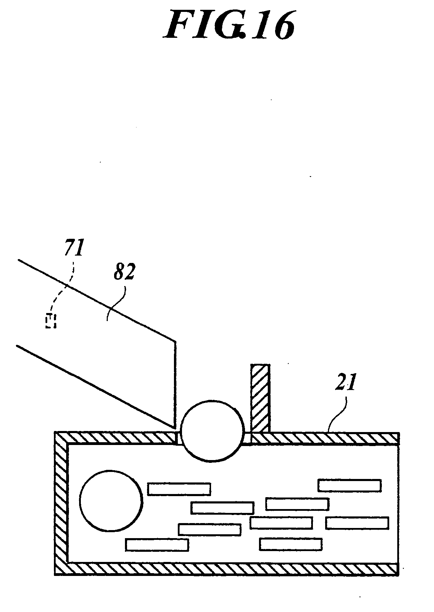

The coin detecting section 71 is composed of, for example, a photo sensor or the like. The coin detection section 71 is disposed, as shown in FIG. 16, in a coin introducing path which is located on the operation board 8a and which is for introducing coins to a coin collecting box 21. The coin detecting section 71 detects whether a coin is remaining in the coin introducing path. When a coin is staying in the coin introducing path, the coin detecting section 71 outputs a signal, which indicates that the machine is full, to the processing apparatus 73. When the signal is inputted, the processing apparatus 73 controls the coin insertion preventing section 72 to prevent a coin being inserted.

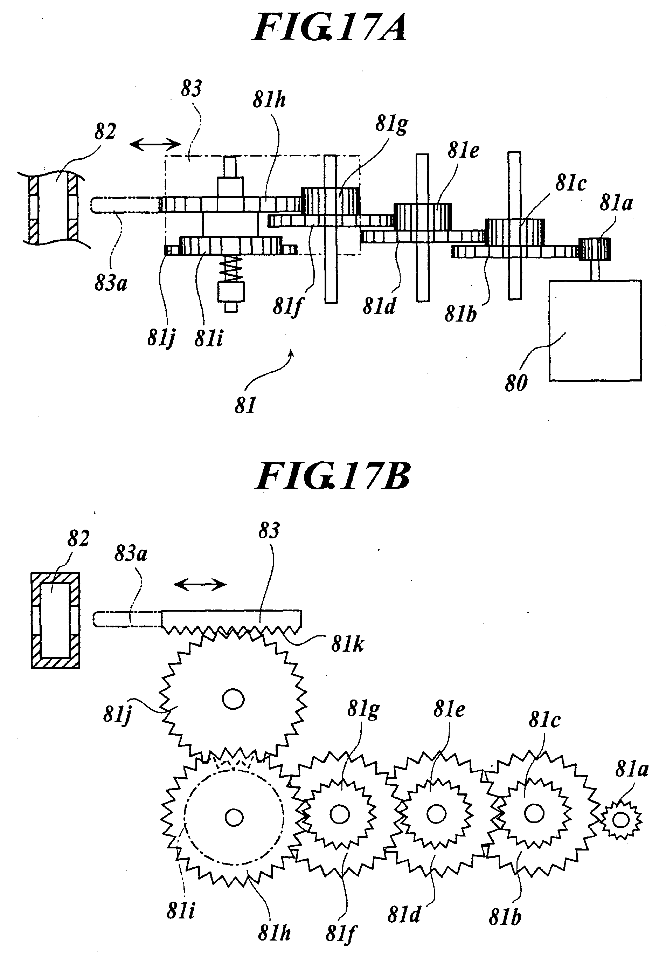

The coin insertion preventing section 72 is, as shown in FIG. 17A and FIG. 17B, includes a motor 80, a gear mechanism 81 moved by the motor 80, a protrusion 83a which is moved by the gear mechanism 81 to close the coin introducing path 82. The gear mechanism 81 is composed of gears 81a to 81j and a rack 81k. Motor power is transmitted to a rack member 83 via the gears 81a to 81j and the rack 81k, and the protrusion 83a disposed on the rack member 83 protrudes to close the coin introducing path 82. Insertion of a coin is thus prevented. Meanwhile, when the reset section 75 is operated the motor 80 rotates backward and the protrusion 83a retracts from the coin introducing path 82, allowing the insertion of a coin again. In FIG. 17A, the reference numeral 84 indicates a clutch, and the gear 81i is pressed on the gear 81h by the biasing force of the coil spring 85, thereby rotating the gear 81i and the gear 81h integrally. When the gear 81i is overloaded, the gear 81i leaves the gear 81h against the biasing force of the coil spring 85 and releases the connection between the protrusion 83a and the motor 80.

Further, the total number of discharged merchandise and other merchandise data may be stored in a semiconductor memory of RFID disposed in the box 2, and perform merchandise management by reading out the total number of discharged merchandise and other merchandise data stored in a semiconductor memory with an external reader. For example, the merchandise to be discharged may be detected by the discharge merchandise detecting section, and the total number of discharged merchandise determined from the detecting signal may be stored in the semiconductor memory. Here, the results counted by the processing apparatus may be stored in the semiconductor memory, or otherwise apply a different counting means. Further, as a merchandise data, the time of sales may be stored.
In the embodiment, as shown in FIG. 4, a mounting box 47b is disposed on the back side of the standing portion in the upper end of the guide plate 47, so that the RFID can be retrofitted therein.

The present invention can be appropriately applied to an automatic vending machine without an external electric power source in performing a predetermined display in a manner viewable from the outside at a preset occasion.

## Claims

1. An automatic vending machine (1) in which a drum (35) of a discharge merchandise holding member (34) in a box body (6) is rotated on a compartment panel (25) by mechanically transmitting operation power by a handle (4) after a coin is inserted and, by rotation of the drum (35), one of a plurality of merchandise holding holes (35a) formed in the drum (35) aligns with a merchandise discharging hole (28) formed in the bottom of a recess (27) formed on the compartment panel (25) so that a piece of merchandise is discharged from the box body (6) containing a plurality of pieces of merchandise with the pieces of merchandise placed on the drum (35), the machine (1) comprising:
a discharge merchandise detecting section (70) to detect the piece of merchandise to be discharged and to output a detection signal thereof:
a display section (74) to display a total number of the discharged merchandise since a predetermined time in a manner viewable from an outside; and
a processing apparatus (73) to determine the total number of the discharged merchandise on the basis of the detection signal outputted by the discharge merchandise detection section (70) and to make the display section (74) display the total number of the discharged merchandise at a preset occasion,
a coin insertion preventing section (72) to prevent insertion of coin,
wherein the discharge merchandise detecting section (70) is disposed in the bottom of the recess (27) formed on the compartment panel (25) in a position corresponding to one of the merchandise holding holes (35a) which is presently not in alignment with the merchandise discharging hole (28) but is to come into alignment with the merchandise discharging hole (28) when the drum (35) rotates accompanying a next rotation of the handle (4), and the discharge detecting section (70) functions to a discharge merchandise detecting apparatus to detect whether there is any merchandise to be discharged next and to output a detection signal thereof, and when the processing apparatus (73) determines that there is no merchandise to be discharged next on the basis of the detection signal outputted by the discharge merchandise detecting apparatus, the processing apparatus (73) controls the coin insertion preventing section (72) to prevent insertion of a coin.

2. The automatic vending machine (1) as claimed in claim 1, further comprising:
a reader (77) provided in the box body (6) to perform communication with an external RFID (78),
wherein when the external RFID (78) is brought close, the reader (77) detects the RFID (78) while the processing apparatus (73) makes the display section (74) display for a predetermined period of time the total number of the discharged merchandise on the basis of a detection signal.

3. The automatic vending machine (1) as claimed in claim 1 or 2, further comprising:
a coin detecting section (71) to detect whether the machine (1) is full of inserted coins and to output a detection signal thereof,
wherein when the process apparatus (73) determines that the machine (1) is full of coins on the basis of the detection signal outputted by the coin detecting section (71), the processing apparatus (73) controls the coin insertion preventing section (72) to prevent insertion of a coin thereafter.

4. The automatic vending machine (1) as claimed in any one of claims 1 to 3,
wherein the processing apparatus (73) makes the display section (74) display a sold out display in conjunction with prevention of insertion of a coin by the coin insertion preventing section (72).

## Patentansprüche

1. Eine automatische Verkaui'smaschine (1), in welcher eine Trommel (35) eines Halteelementes (34) für die auszugebende Ware in einem Gehäusekörper (6) auf einem Fachboden (25) rotiert wird durch mechanische Übertragung von Antriebsleistung mittels eines Griffes (4), nachdem eine Münze eingeworfen wurde, und durch Drehung der Trommel (35) eine aus einer Vielzahl von die Ware haltenden Öffnungen (35a), die in der Trommel (35) ausgebildet sind, mit einer Abgabeöffnung (28) für die Ware, die in dem Boden einer auf dem Fachboden (25) ausgebildeten Rücknahme (27) gebildet ist, ausgerichtet wird, sodass eine der Waren aus dem Gehäusekörper (6), der eine Vielzahl von Waren beinhaltet, wobei die verschiedenen Waren auf der Trommel (35) positioniert sind, ausgegeben wird, wobei die Maschine (1) umfasst:
einen Abschnitt (70) zur Erfassung der auszugebenden Ware, um die Ware zu erfassen, die ausgegeben werden soll und um ein Erfassungssignal derselben auszugeben;
einen Anzeigeabschnitt (74), um eine Gesamtzahl der seit einem vorgegebenen Zeitpunkt ausgegebenen Waren anzuzeigen, in einer von außen sichtbaren Art; und
eine Verarbeitungsvorrichtung (73), um die Gesamtzahl der ausgegebenen Waren zu bestimmen auf der Basis des Erfassungssignals, das durch den Abschnitt (70) zur Erfassung der ausgegebenen Ware ausgegeben wurde und um den Anzeigeabschnitt (74) zu veranlassen, die Gesamtzahl der ausgegebenen Waren zu einer vorgegebenen Gelegenheit anzuzeigen,
einen Münzeinwurfsverhinderungsabschnitt (72), um den Einwurf einer Münze zu verhindern;
wobei der Abschnitt (70) zur Erfassung der auszugebenden Ware in dem Boden der Rücknahme (27), die in dem Fachboden ausgebildet ist, in einer Position angeordnet ist, die einer der die Ware haltenden Öffnung (35a) entspricht, welche aktuell nicht mit der Abgabeöffnung (28) für die Ware ausgerichtet ist, aber in eine Ausrichtung mit der Abgabeöffnung (28) für die Ware gelangt, wenn die Trommel (35) sich zusammen mit einer nächsten Drehung des Griffes (4) dreht, und wobei der Abschnitt (70) zur Erfassung der Ausgabe derart mit einer Vorrichtung zur Erfassung der Ausgabe einer Ware arbeitet, dass er erfasst, ob es eine Ware gibt, die als nächstes ausgegeben werden soll, und ein Erl=assungssigna! hierzu erzeugt, und wenn die Verarbeitungsvorrichtung (73) bestimmt, dass es kleine Ware gibt, die als nächstes ausgegeben werden soll, auf Basis des Erfassungssignals, das durch die Vorrichtung zur Erfassung von auszugebender Ware ausgegeben wurde, dann steuert die Verarbeitungsvorrichtung (73) den Münzeinwurfsverhinderungsabschnitt (72), um einen Einwurf einer Münze zu verhindern.

2. Die automatische Verisaufsmaschine (1), wie in Anspruch 1 beansprucht, ferner umfassend:
eine Leseeinrichtung (77), die in dem Gehäusekörper (6) vorgesehen ist, um eine Kommunikation mit einer externen RFID (78) auszuführen,
wobei, wenn die externe RFID (78) angenähert wird, die Leseeinrichtung (77) die RFID (78) erfasst und die Verarbeitungsvorrichtung (73) den Anzeigeabschnitt (74) veranlasst, für eine vorbestimmte Zeitspanne die Gesamtzahl von ausgegebenen Waren auf Basis eines ErFassungssignals anzuzeigen.

3. Die automatische Verkaufsmaschine (1) wie in Anspruch 1 oder 2 beansprucht, ferner umfassend:
einen Münzerfassungsabschnitt (71), um zu erfassen, ob die Maschine (1) voll mit eingeworfenen Münzen ist und um ein Erfassungssignal hierüber auszugeben,
wobei, wenn die Verarbeitungsvorrichtung (73) auf Basis des Erfassungssignals, das durch den Münzerfassungsabschnitt (71) ausgegeben wurde, feststellt, dass die Maschine (1) voll mit Münzen ist, die Verarbeitungsvorrichtung (73) den Münzeinwurfverhinderungsabschnitt (72) derart ansteuert, dass danach ein Einwurf einer Münze verhindert wird.

4. Die automatische Verkaufsmaschine (1) wie in einem der Ansprüche 1 bis 3 beansprucht, wobei die Verarbeitungsvorrlchtung (73) den Anzeigeabschnitt (74) veranlasst, eine Ausverkauft-Anzeige anzuzeigen, in Verbindung mit der Verhinderung des Einwerfens einer Münze durch den Münzeinwurfverhinderungsabschnitt (72).

## Revendications

1. Distributeur automatique (1) dans lequel un tambour (35) d'un élément de conservation de marchandises à évacuer (34) dans un corps de boîtier (6) est entraîné en rotation sur un panneau de compartiment (25) par la puissance d'opération de transmission par voie mécanique d'une molette (4) après l'insertion d'une pièce de monnaie et, par la rotation du tambour (35), l'un d'une pluralité de trous de conservation de marchandises (35a) ménagés dans le tambour (35) s'aligne avec un trou d'évacuation de marchandise (28) ménagé dans le fond d'un évidemment (27) ménagé sur le panneau de compartiment (25) de sorte qu'une partie de la marchandise est évacuée du corps de boîtier (6) contenant une pluralité d'articles de marchandises, les articles de marchandises étant placés sur le tambour (35), la machine (1) comprenant :
une section de détection de marchandise à évacuer (70) pour détecter l'article de marchandise devant être évacué et pour fournir en sortie un signal de détection de celui-ci ;
une section d'affichage (74) pour afficher un nombre total des marchandises évacuées depuis un temps prédéterminé de manière à pouvoir l'observer depuis l'extérieur ; et
un appareil de traitement (73) pour déterminer le nombre total des marchandises évacuées sur la base du signal de détection fourni en sortie par la section de détection de marchandise à évacuer (70) et à faire en sorte que la section d'affichage (74) affiche le nombre total des marchandises évacuées à un moment préétabli ;
une section d'empêchement d'insertion de pièce de monnaie (72) pour empêcher l'insertion d'une pièce de monnaie ;
dans lequel la section de détection de marchandise à évacuer (70) est disposée au fond de l'évidement (27) ménagé sur le panneau de compartiment (25) à une position correspondant à un des trous de conservation de marchandises (35a) qui n'est actuellement pas aligné avec le trou d'évacuation de marchandise (28) mais qui vient à s'aligner avec le trou d'évacuation de marchandise (28) lorsque le tambour (35) tourne conjointement à une rotation ultérieure de la molette (4), et la section de détection d'évacuation (70) fonctionne pour un appareil de détection de marchandise à évacuer afin de détecter si une marchandise quelconque doit être évacuée ultérieurement et afin de fournir en sortie un signal de détection de celle-ci, et lorsque l'appareil de traitement (73) détermine qu'il n'y a aucune marchandise à évacuer ultérieurement sur la base du signal de détection fourni en sortie par l'appareil de détection de marchandise à évacuer, l'appareil de traitement (73) commande la section d'empêchement d'insertion de pièce de monnaie (72) afin d'empêcher l'insertion d'une pièce de monnaie.

2. Distributeur automatique (1) selon la revendication 1, comprenant en outre :
un lecteur (77) prévu dans le corps de boîtier (6) pour réaliser une communication avec un dispositif d'identification par radiofréquence RFID externe (78),
dans lequel lorsque le dispositif d'identification RFID externe (78) est rapproché, le lecteur (77) détecte le dispositif d'identification RFID (78) alors que l'appareil de traitement (73) fait en sorte que la section d'affichage (74) affiche pendant un intervalle de temps prédéterminé le nombre total des marchandises évacuées sur la base d'un signal de détection.

3. Distributeur automatique (1) selon la revendication 1 ou 2, comprenant en outre :
une section de détection de pièces de monnaie (71) pour détecter si la machine (1) est remplie de pièces de monnaie insérées et pour fournir en sortie un signal de détection de celles-ci,
dans lequel lorsque l'appareil de traitement (73) détermine que la machine (1) est remplie de pièces de monnaie sur la base du signal de détection fourni en sortie par la section de détection de pièces de monnaie (71), l'appareil de traitement (73) commande la section d'empêchement d'insertion de pièce de monnaie (72) dans le but d'empêcher l'insertion d'une pièce de monnaie par la suite.

4. Distributeur automatique (1) selon l'une quelconque des revendications 1 à 3, dans lequel l'appareil de traitement (73) fait en sorte que la section d'affichage (74) affiche « marchandise épuisée » en association avec l'empêchement de l'insertion d'une pièce de monnaie grâce à la section d'empêchement d'insertion de pièces de monnaie (72).
